# FASCICULE DE BREVET EUROPEEN

(11) **EP 2 864 067 B1**
(45) Date de publication et mention de la délivrance du brevet: **17.08.2016**
(21) Numéro de dépôt: 13737310.6
(22) Date de dépôt: 12.06.2013
(51) Int. Cl.: B21C 37/15, B21C 37/20, B21C 37/26, B21J 5/12, B21K 23/00, B21K 1/76, B21D 17/02, B21D 22/04, B60N 2/48

(54) **PROCÉDÉ DE CRANTAGE DE TUBE, ET MACHINE DE CRANTAGE ASSOCIÉE**
ROHRKERBUNGSVERFAHREN UND ZUGEHÖRIGE KERBUNGSMASCHINE
TUBE NOTCHING METHOD, AND ASSOCIATED NOTCHING MACHINE

(30) Priorité: 15.06.2012 FR 1255602
(43) Date de publication de la demande: 29.04.2015
(73) Titulaire: Numalliance SAS, 88470 Saint Michel sur Meurthe (FR)
(72) Inventeur: BAUDY, Sébastien, F-35210 Chatillon En Vendelais (FR)
(74) Mandataire: Rhein, Alain
(86) Numéro de dépôt international: PCT/FR2013/051373
(87) Numéro de publication internationale: WO 2013/186490

(56) Documents cités:
- FR-A1- 2 816 857
- FR-A1- 2 842 752
- JP-A- 59 193 731

## Description

### Domaine technique et état de l'art

L'invention concerne un procédé et une machine de crantage d'un tube 10 tel qu'un tube d'armature d'appui-tête d'un siège de véhicule automobile.

L'invention s'applique en particulier, mais non limitativement aux appuie-têtes réglables en hauteur dont l'armature est composée de deux branches parallèles dont l'une au moins comporte une pluralité de crans définissant chacun une position de réglage en hauteur de l'appui-tête et un cran d'extrémité formant une butée positive s'opposant à une extraction involontaire de l'appui-tête hors de ses guides lorsqu'il est tiré vers le haut, sauf après un déverrouillage volontaire. Pour le maintien de l'appui-tête, ces crans coopèrent avec des loquets intégrés dans des douilles de guidage prévues en haut du dossier du siège.

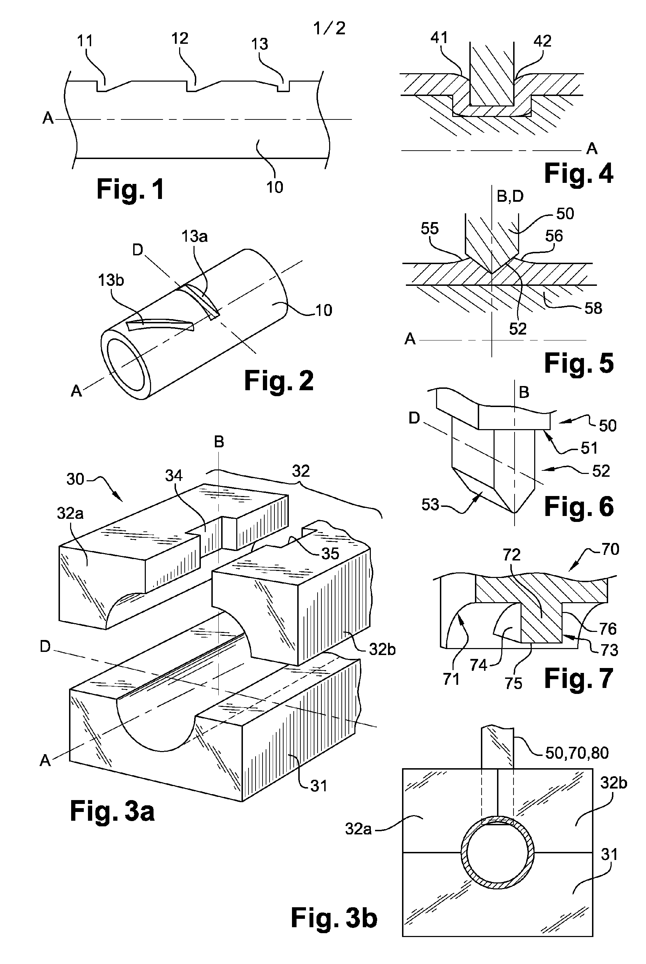

Différents profils de crans sont représentés sur la figure 1. Certains crans 11, 12 comprennent un flanc de verrouillage abrupt et un flanc incliné, d'autres crans, par exemple le cran d'extrémité 13 représenté en détail sur la figure 2, comprennent deux flancs de verrouillage abrupts et un fond plat.

Les flancs de verrouillage doivent être les plus abrupts possibles, voire en dévers (ou contre-dépouille), ils doivent présenter un angle le plus vif possible avec la surface extérieure de la paroi du tube, ils doivent être le moins large possible et le plus profond possible pour garantir l'impossibilité d'un déverrouillage involontaire de l'appui-tête.

Sur des tiges métalliques pleines, ces crans sont facilement réalisés quel que soit leur profil, par usinage ou par déformation à froid (estampage). Mais, pour réduire le poids des armatures d'appui-tête, on cherche à réaliser des armatures en tube et la réalisation d'un cran sur un tube par un simple emboutissage transversal provoque inévitablement un affaissement 41, 42 de la paroi externe du tube (figure 4). Cette déformation ne permet pas d'obtenir les angles vifs souhaités pour les flancs transversaux des crans pour rendre impossible un déverrouillage involontaire de l'appui-tête. Cette déformation entraîne de plus une augmentation locale du diamètre du tube, qui perturbe le coulissement du tube dans la douille de guidage.

Le document FR 2 842 752, sur lequel se base le préambule de la revendication 1, décrit un procédé et une presse de crantage permettant de réaliser des crans à flancs transversaux sur un tube. L'utilisation d'un mandrin spécifique à l'intérieur du tube, en contact avec la paroi du tube, permet à la matière repoussée par le poinçon de migrer vers l'intérieur du tube, ce qui évite l'augmentation locale du diamètre du tube. Cette solution permet de réaliser des crans à un ou deux flancs transversaux, y compris des crans de faible largeur. Mais cette solution technique ne permet pas d'obtenir les angles vifs souhaités pour les flancs transversaux des crans ; elle ne permet pas non plus de réaliser des crans de profondeur supérieure à l'épaisseur de la paroi du tube.

Le document FR 2 816 857 décrit un procédé et un poinçon de crantage permettant de réaliser des crans à un ou deux flancs transversaux sur le tube. L'utilisation d'un poinçon selon une direction inclinée d'environ 30° permet des flancs abrupts avec une arête vive. Mais, du fait de l'inclinaison du poinçon, la largeur d'un cran est nécessairement bien supérieure à la largeur de la dent de poinçonnage et il n'est en pratique pas possible de réaliser des flancs de faible largeur, notamment des crans à double flancs transversaux.

### Description de l'invention

L'invention propose une nouvelle solution de crantage de tube, permettant de réaliser des crans à un ou deux flancs transversaux de meilleure qualité que les procédés antérieurs décrits ci-dessus. Plus précisément, l'invention propose un nouveau procédé au cours duquel on réalise, dans une paroi externe d'un tube s'étendant selon un axe longitudinal, par guidage de poinçons dans un plan de travail et selon une direction de travail concourante avec l'axe longitudinal du tube, au moins un cran comprenant au moins un flanc de verrouillage.

Le procédé selon l'invention est caractérisé en ce qu'on réalise les étapes suivantes :
- ET1 : on guide un premier poinçon selon la direction de travail, une dent de préformage du premier poinçon s'étendant depuis une extrémité du premier poinçon et parallèlement au plan de travail, une intersection d'une extrémité d'attaque de la dent de préformage avec le plan de travail formant une droite, et une intersection de ladite extrémité d'attaque de la dent de préformage avec un plan parallèle à l'axe longitudinal du tube formant une courbe convexe, et on exerce sur le premier poinçon un effort de préformage apte à faire pénétrer la dent de préformage dans la paroi du tube jusqu'à obtenir une protubérance de matière de part et / ou d'autre de l'extrémité d'attaque de la dent de préformage, un mandrin cylindrique plein étant positionné à l'intérieur du tube, puis
- ET2 : on guide un deuxième poinçon selon la direction de travail, une dent de poinçonnage du deuxième poinçon s'étendant depuis une extrémité du deuxième poinçon et parallèlement au plan de travail, une extrémité d'attaque de la dent de poinçonnage présentant une forme complémentaire à une forme du cran à réaliser, et on exerce sur le poinçon et selon la direction de travail un effort de poinçonnage apte à faire pénétrer la dent de poinçonnage dans la paroi du tube d'une distance égale à la profondeur du cran à réaliser, un mandrin de poinçonnage étant positionné à l'intérieur du tube, le dit mandrin de poinçonnage présentant au voisinage d'une zone de crantage une gorge adaptée à contenir une matière refoulée lors du déplacement du deuxième poinçon.

Lors de l'étape ET1, le métal de la paroi du tube, paroi soutenue par le mandrin plein, reflue pour former des protubérances de matière en excès sur les bords du tube, de part et / ou d'autre de la dent de préformage. Lors de l'étape ET2, la matière en excès sur les bords du tube est entraînée par la dent de poinçonnage pour former le cran. Dit autrement, par rapport à un procédé poinçonnage connu comprenant uniquement l'étape ET2, l'étape ET1 d'un procédé selon l'invention permet d'accumuler au niveau de la zone d'intersection de la surface extérieure de la paroi du tube et du flanc du cran, de la matière qui va nécessairement être entraînée vers l'intérieur du cran au moment de l'étape ET2. Le cran obtenu présente ainsi un angle vif avec la surface extérieure de la paroi du tube, il n'y a pas d'affaissement local du bord du tube. Par ailleurs, la largeur du cran réalisé étant égale à la largeur de la dent du deuxième poinçon, il est possible de réaliser des crans de largeur aussi petite que souhaitée en choisissant une dent de la largeur souhaitée. Des essais ont également permis de réaliser des crans de profondeur supérieure à l'épaisseur de la paroi du tube.

A noter que, dans le procédé selon l'invention, la réalisation d'une protubérance est importante pour la formation d'un cran comportant un flanc avec une arête vive, mais n'est pas indispensable pour la formation d'un flanc pour lequel la qualité de l'arête (vive ou arrondie) a peu d'importance, par exemple pour un flanc incliné par rapport à la direction de travail. Ainsi, pour la réalisation d'un cran comportant un flanc avec arête vive et un flanc avec arête quelconque, il est suffisant de former une unique protubérance, d'un seul côté de la face d'attaque de la dent de préformage.

La forme et les dimensions de l'extrémité d'attaque de la dent de poinçonnage du deuxième poinçon sont complémentaires de la forme et des dimensions du cran à réaliser. Ainsi pour un cran présentant un flanc parallèle au plan de travail, un fond plat et un flanc incliné par rapport à la direction de travail, l'extrémité d'attaque de la dent de poinçonnage comprend de la même façon une face d'attaque reliant des extrémités d'une première face latérale parallèle au plan de travail et d'une deuxième face latérale inclinée par rapport au plan de travail. Pour un cran présentant deux flancs parallèles au plan de travail et un fond plat, la dent de poinçonnage comprend de la même façon une face d'attaque reliant des extrémités de deux faces latérales parallèles au plan de travail. Etc.

Egalement, la forme de la dent de préformage du premier poinçon utilisé dans un procédé selon l'invention dépend de la forme finale des crans à réaliser. Ainsi, par exemple pour réaliser un cran de forme dissymétrique, présentant un flanc parallèle au plan de travail et un flanc incliné par rapport au plan de travail, il est possible d'utiliser un premier poinçon présentant une dent de préformage dissymétrique, ayant une extrémité d'attaque convexe telle que l'intersection de ladite extrémité d'attaque avec le plan de travail forme une droite et telle que l'intersection de l'extrémité d'attaque avec un plan parallèle à l'axe longitudinal du tube et passant par l'axe longitudinal du tube forme une courbe convexe dissymétrique adaptée à la forme du cran souhaitée, comme on le verra mieux plus loin dans des exemples.

Selon un mode de mise en oeuvre d'un procédé selon l'invention, au cours de l'étape ET2, on utilise un deuxième poinçon dont une hauteur de la dent de poinçonnage est égale à la profondeur du cran à réaliser, et dont l'extrémité présente une forme complémentaire à une forme extérieure de la paroi du tube à cranter, par exemple une forme de portion de cylindre en creux. Ainsi, lors de l'étape ET2, la dent de poinçonnage, qui s'étend à partir de l'extrémité du poinçon, vient former les flancs et le fond du cran, comme on le verra mieux plus loin, en "consommant" la plus grande partie des protubérances de matière formées lors de l'étape ET1. Et à la fin de l'étape ET2, l'extrémité du deuxième poinçon vient en appui sur la surface externe de la paroi du tube pour aplanir le reste des protubérances et ainsi calibrer la surface externe de la paroi du tube. Le cran ainsi obtenu présente un flanc de verrouillage parallèle au plan de travail.

Selon un autre mode de mise en oeuvre du procédé selon l'invention, au cours de l'étape ET2, on utilise un deuxième poinçon dont la hauteur de la dent de poinçonnage est supérieure à la profondeur du cran à réaliser, puis on réalise l'étape ET3 suivante :
- ET3 : on guide un troisième poinçon selon la direction de travail, le troisième poinçon comprenant une extrémité de forme complémentaire à une forme extérieure de la paroi du tube à cranter, et on exerce sur le troisième poinçon un effort de calibrage pour repousser à l'intérieur du cran formé une matière en surplus sur la surface externe du tube au voisinage des arêtes du cran formé lors de l'étape ET2.

Ainsi, lors de l'étape ET2, la dent de poinçonnage, qui s'étend à partir de l'extrémité du poinçon, vient former le cran, les flancs et le fond du cran en "consommant" la plus grande partie des protubérances de matière formées lors de l'étape ET2 ; par contre l'extrémité du deuxième poinçon ne touche pas la paroi externe du tube, de sorte qu'il reste une légère protubérance de la paroi externe du tube au niveau du flanc du cran. Puis, lors de l'étape ET3, l'extrémité du troisième poinçon vient épouser la surface extérieure de la paroi du tube et aplanir la légère protubérance sur la surface externe de la paroi du tube. Le troisième poinçon ne présentant pas de dent, l'intérieur du cran est libre au moment de l'étape ET3 de sorte que l'extrémité du troisième poinçon repousse à l'intérieur du cran le reste de matière en excès sur la paroi externe du tube : on obtient ainsi un cran avec un ou des flancs en contre-dépouille, c'est-à-dire légèrement incliné par rapport au plan de travail.

La forme de la dent de préformage, et notamment la forme de son extrémité d'attaque, est également optimisée en fonction de la forme et des dimensions du cran à réaliser. Pour un cran symétrique, par exemple un cran à deux flancs parallèles au plan de travail, la face d'attaque de la dent de préformage peut présenter une forme convexe telle que l'intersection de la face d'attaque avec un plan parallèle à l'axe longitudinal du tube et parallèle à la direction de travail forme une courbe convexe par exemple :
- une courbe en V constituée de deux segments, l'intersection des deux segments formant une arête vive ou une arête arrondie en arc de cercle, en parabole ou en hyperbole, ou
- une courbe en U, présentant des arêtes vives ou arrondies, ou
- une parabole ou une hyperbole.

La forme de la dent de préformage, et notamment la forme de la face d'attaque de la dent de préformage, est également optimisée en fonction de la quantité de matière que l'on souhaite repousser de part et d'autre de la dent de préformage lors de l'étape ET1: elle est donc optimisée en fonction de l'épaisseur du tube d'une part, et de la facilité à repousser la matière d'autre part. Par exemple, plus la face d'attaque se rapproche d'une pointe (courbe en V constituée de deux demi-droites, avec une arête vive ou arrondie par exemple), plus il est facile de repousser la matière de part et d'autre de la face d'attaque et plus il est facile d'obtenir la quantité de matière en excès recherchée. Mais plus la face d'attaque se rapproche d'une pointe, plus la matière est marquée et reste marquée sur la paroi du fond du cran, au niveau de la zone de contact de la dent de préformage avec le métal du tube. Ainsi, la forme de la face d'attaque résulte d'un compris.

La forme de l'extrémité du deuxième poinçon ou du troisième poinçon dépend évidemment de la forme extérieure de la paroi du tube à cranter : la forme de l'extrémité du deuxième poinçon, ou du troisième poinçon s'il y a une étape ET3, doit être complémentaire à la forme extérieure de la paroi du tube à cranter. Ainsi, pour cranter des tubes cylindriques, l'extrémité du deuxième poinçon ou/et celle du troisième poinçon a (ont) une forme de portion de cylindre en creux.

L'invention concerne également une machine pour la réalisation de crans sur un tube s'étendant selon un axe longitudinal, machine comprenant un outil de poinçonnage comprenant :
- un moyen pour immobiliser un tube à cranter tout en laissant libre d'accès une zone à cranter sur une paroi externe du tube, et
- un moyen pour positionner au voisinage de la zone à cranter puis pour entraîner en translation dans un plan de travail et selon une direction de travail concourante avec l'axe longitudinal du tube, successivement un premier poinçon puis un deuxième poinçon :
   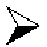 une dent de préformage du premier poinçon s'étendant depuis une extrémité du premier poinçon et parallèlement au plan de travail, une intersection d'une extrémité d'attaque de la dent de préformage avec le plan de travail formant une droite, et une intersection de ladite extrémité d'attaque de la dent de préformage avec un plan parallèle à l'axe longitudinal du tube formant une courbe convexe, et
   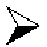 une dent de poinçonnage du deuxième poinçon s'étendant depuis une extrémité du deuxième poinçon et parallèlement au plan de travail, une extrémité d'attaque de la dent de poinçonnage présentant une forme complémentaire à une forme du cran à réaliser.

L'outil de poinçonnage peut également comprendre un moyen pour positionner à l'intérieur du tube à cranter successivement un mandrin plein puis un mandrin à gorge.

Selon une variante, pour réaliser simultanément plusieurs crans le long d'un même tube, le moyen de positionnement et d'entraînement des poinçons est adapté pour :
- positionner le long de l'axe d'un tube plusieurs premiers poinçons, chacun au voisinage d'une zone à cranter, puis entraîner simultanément les premiers poinçons en translation selon des directions de travail parallèles entre elles, toutes concourantes avec l'axe longitudinal du tube et perpendiculaires à l'axe longitudinal du tube, puis
- positionner le long de l'axe d'un tube plusieurs deuxièmes poinçons, chacun au voisinage d'une zone à cranter, puis entraîner simultanément les deuxièmes poinçons en translation selon les directions de travail.

Egalement, la machine peut comporter deux outils de poinçonnage, montés en parallèle, pour permettre de cranter simultanément les deux branches parallèles d'armatures en forme de U.

### Brève description des figures

L'invention sera mieux comprise, et d'autres caractéristiques et avantages de l'invention apparaîtront à la lumière de la description qui suit d'exemples de réalisation d'une machine de cintrage selon l'invention. Ces exemples sont donnés à titre non limitatif. La description est à lire en relation avec les dessins annexés dans lesquels :
- la figure 1 est une vue partielle d'un tube cranté d'armature d'appui-tête d'un siège de véhicule automobile,
- la figure 2 est une vue détaillée partielle en perspective d'un tube cranté,
- les figures 3a, 3b montrent un mode de réalisation du moyen de positionnement d'une machine selon l'invention,
- la figure 4 montre la réalisation d'un cran selon l'art antérieur,
- la figure 5 montre la réalisation de l'étape ET1 d'un procédé selon l'invention,
- la figure 6 montre le détail d'une dent d'un premier poinçon utilisé pour réaliser l'étape ET1 selon la figure 5,
- la figure 7 est une vue en perspective d'un deuxième poinçon utilisé sur les figures 10a, 10b
- la figure 8 est une vue en perspective d'un deuxième poinçon utilisé sur la figure 11a
- la figure 9 est une vue en perspective d'un troisième poinçon utilisé sur les figures 11c, 11d
- les figures 10a, 10b montrent la réalisation d'un cran selon un mode de mise en oeuvre du procédé de l'invention,
- les figures 11a à 11d montrent la réalisation d'un cran selon un autre mode de mise en oeuvre du procédé de l'invention.

Les repères dans l'espace sont définis ci-dessous ; ils sont utilisés dans toute la description et les revendications de la présente demande de brevet.

Les figures 4, 5, 10a-b, 11a-d sont des vues de détail partielles de tubes et de poinçons au voisinage de la zone à cranter. Les poinçons et le tube sont toujours représentés en position de travail l'un par rapport à l'autre, de sorte à utiliser les mêmes axes ou plans pour définir la géométrie des poinçons et du tube.

L'axe longitudinal A est l'axe longitudinal du tube à cranter. Dans tous les exemples représentés, l'axe A est horizontal par souci de clarté.

La profondeur d'un cran est mesurée selon la direction de travail B. La direction de travail B est aussi la direction d'entraînement en translation des poinçons. La direction de travail B est un axe concourant avec l'axe longitudinal et est orientée en direction de l'axe longitudinal du tube.

La longueur d'un cran à réaliser est mesurée selon un axe principal D, perpendiculaire à la direction de travail B. La largeur d'un cran est mesurée selon un axe perpendiculaire à la direction B et perpendiculaire à l'axe D. Dans les exemples représentés, la largeur d'un cran est constante sur toute la hauteur (ou profondeur) d'un cran. Mais selon d'autres modes de réalisation, la largeur d'un cran peut être variable selon la hauteur d'un cran ; c'est le cas par exemple de cran présentant un unique flanc de verrouillage (parallèle au plan de travail) et un flanc incliné par rapport au plan de travail. La direction de travail B et l'axe longitudinal A définissent ensemble un plan qui correspond au plan de la feuille sur les figures 1, 4-5, 10a-10b, 11a-11d. Dans les exemples représentés, la direction de travail B est perpendiculaire à l'axe A longitudinal du tube, orientée vers le bas en direction de l'axe A du tube. Mais dans d'autres modes de réalisation, la direction de travail B peut également être inclinée par rapport à l'axe du tube.

La direction de travail B et l'axe principal D définissent ensemble un plan de travail C, plan parallèle à un flanc de verrouillage d'un cran à réaliser, le plan de travail C est également parallèle à au moins une face latérale des dents de poinçonnage des poinçons de l'étape ET2, face latérale correspondant au flanc de verrouillage à réaliser.

Dans les exemples représentés, le plan de travail C correspond à un plan de symétrie des crans à réaliser et des dents des poinçons, perpendiculaire à l'axe longitudinal du tube. Mais peut être envisagé tout autre plan parallèle à la direction B et parallèle à un flanc de verrouillage (par exemple le plan passant par la face latérale des poinçons correspondant au flanc de verrouillage à former), et en particulier si la dent d'un poinçon ne comprend pas de plan de symétrie.

Dans les exemples représentés également, les poinçons permettent de réaliser des crans à flancs de verrouillage transversaux, c'est-à-dire des crans perpendiculaires à l'axe A longitudinal du tube, tels le cran 13 a, d'où un plan de travail C transversal, perpendiculaire à l'axe A du tube. Mais le procédé selon l'invention permet également de réaliser des crans non perpendiculaires à l'axe A du tube, tel le cran 13b ; on utilise pour cela des poinçons définis selon un plan de travail C défini par :
- une direction de travail B non perpendiculaire à l'axe du tube A, et un axe principal D perpendiculaire à l'axe A longitudinal du tube, ou
- une direction de travail B perpendiculaire à l'axe longitudinal A du tube et un axe principal D non perpendiculaire à l'axe A du tube (cas du cran 13b), ou
- une direction de travail B non perpendiculaire à l'axe du tube A et un axe principal D non perpendiculaire à l'axe A du tube.

### Description de modes de réalisation de l'invention

Le procédé selon l'invention permet de réaliser des crans 11, 12 comprenant un flanc transversal abrupt à arête vive, et un flanc incliné, ou bien des crans 13 comprenant deux flancs transversaux abrupts à arêtes vives. Il permet aussi bien sûr de réaliser des crans à deux flancs inclinés.

Dans les exemples représentés sur les figures 4 à 11, on a représenté plus particulièrement la réalisation de crans à deux flancs transversaux, à arêtes vives.

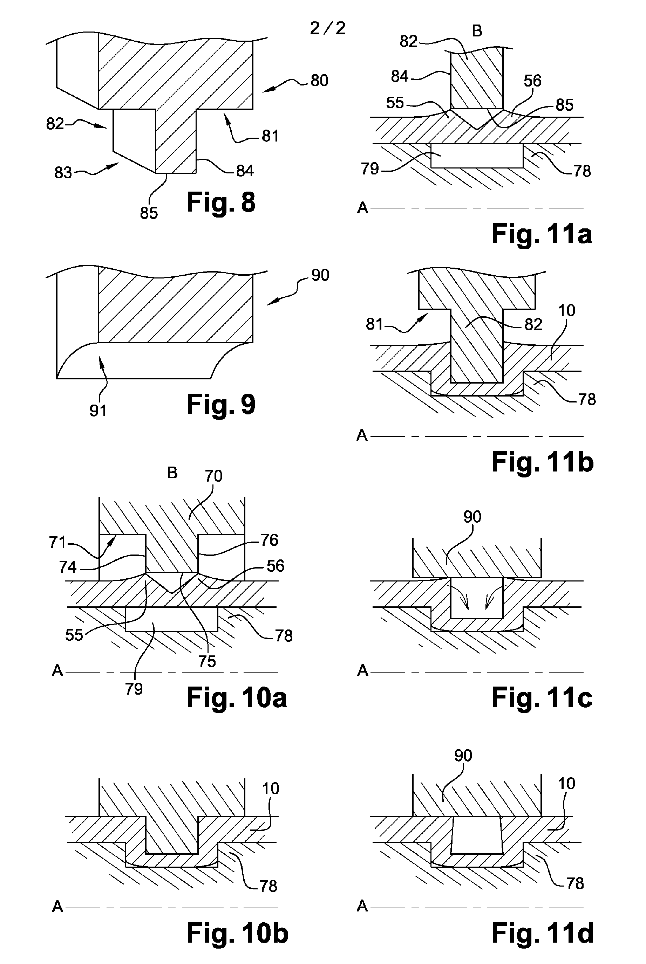

Le procédé selon l'invention permet de réaliser, dans une paroi externe d'un tube 10 s'étendant selon un axe longitudinal A, par guidage de poinçons dans un plan de travail C et selon une direction de travail B concourante avec l'axe longitudinal A du tube, au moins un cran 11, 12, 13, 13a, 13b comprenant au moins un flanc de verrouillage sensiblement parallèle au plan de travail, ou en contre-dépouille par rapport au plan de travail. Le procédé selon l'invention comprend essentiellement deux étapes :
- ET1 (figure 5) : on guide un premier poinçon 50 selon la direction de travail B, une dent de préformage 52 du premier poinçon s'étendant depuis une extrémité 51 du premier poinçon et parallèlement au plan de travail C, une intersection d'une extrémité d'attaque 53 de la dent de préformage 52 avec le plan de travail formant une droite, et une intersection de ladite extrémité d'attaque 53 de la dent de préformage 52 avec un plan parallèle à l'axe longitudinal (et passant par l'axe longitudinal dans les exemples représentés) du tube formant une courbe convexe, et on exerce sur le premier poinçon un effort de préformage apte à faire pénétrer la dent de préformage dans la paroi du tube jusqu'à obtenir une protubérance 55, 56 de matière de part et / ou d'autre de l'extrémité d'attaque 53 de la dent de préformage 52, un mandrin 58 cylindrique plein étant positionné à l'intérieur du tube, puis
- ET2 (figures 10a-b, figures 11a-b) : on guide un deuxième poinçon 70, 80 selon la direction de travail B, une dent de poinçonnage 72, 82 du deuxième poinçon s'étendant depuis une extrémité 71, 81 du deuxième poinçon et parallèlement au plan de travail C, une extrémité d'attaque 73, 83 de la dent de poinçonnage 72, 82 présentant une forme complémentaire à une forme du cran à réaliser, et on exerce sur le poinçon un effort de poinçonnage apte à faire pénétrer la dent de poinçonnage dans la paroi du tube d'une distance selon la direction de travail égale à la profondeur du cran à réaliser, un mandrin de poinçonnage 78 étant positionné à l'intérieur du tube, le dit mandrin de poinçonnage présentant au voisinage d'une zone de crantage une gorge 79 adaptée à contenir une matière refoulée lors du déplacement du deuxième poinçon.

Lors de l'étape ET1 (figure 5), le premier poinçon est entraîné en translation selon la direction de travail B, sur une distance inférieure à l'épaisseur de la paroi du tube. La formation du cran est amorcée par la formation de protubérances 55, 56 (matière en excès) de part et d'autre de la dent de préformage du premier poinçon. Le premier poinçon ne doit pas être entraîné trop profond pour ne pas perforer la paroi du tube. L'enfoncement du premier poinçon est optimisé en fonction de la forme de la dent du premier poinçon et de la forme du cran à réaliser, de sorte que la quantité de matière contenue dans les protubérances 55, 56 soit égale ou légèrement supérieure à la quantité de matière qui est entraînée ensuite par la dent de poinçonnage du deuxième poinçon lors de l'étape ET2.

La dent de préformage représentée en vue de face sur la figure 5 est représentée en perspective sur la figure 6. Dans ce mode de réalisation, l'intersection de l'extrémité d'attaque 53 de la dent de préformage 52 avec le plan de travail C est une droite sensiblement parallèle à l'axe D ; et l'intersection de l'extrémité d'attaque 53 avec un plan parallèle à l'axe longitudinal du tube et parallèle à la direction B (et donc perpendiculaire à l'axe D) forme une courbe convexe, de type courbe en V constituée de deux segments reliés par une arête arrondie en arc de cercle de rayon 0.1 à 1 mm.

Lors de l'étape ET2, le deuxième poinçon est entraîné en translation selon la direction B sur une distance égale à la hauteur du cran souhaitée. Le deuxième poinçon forme le cran en entraînant avec lui la matière contenue dans les protubérances. Il en résulte des crans où l'intersection d'un flanc avec la surface externe du tube forme une arête vive. La dent de poinçonnage du deuxième poinçon a une extrémité d'attaque 73, 83 complémentaire à la forme du cran à réaliser : une premier face latérale transversale 74, 84, une face d'attaque 75, 85, et une deuxième face latérale 76, 86 dans les exemples des figures 10a-b, 11a-b.

Les figures 5, 10a, 10b montrent une mise en oeuvre du procédé en deux étapes seulement. Le cran est complètement formé lors de l'étape ET2. La dent de poinçonnage 72 du deuxième poinçon 70 (figure 7) a une hauteur (selon la direction B) égale à la profondeur du cran à réaliser, l'extrémité 71 du poinçon 70 présente une forme complémentaire à la forme extérieure de la paroi du tube à cranter, en l'espèce une forme de portion de cylindre creuse. La figure 10a montre la position du poinçon 70 lorsqu'il arrive au contact de la zone à poinçonner sur la paroi du tube 10. La distance entre les sommets des protubérances 55, 56 est environ égale à la largeur de la dent de poinçonnage du deuxième poinçon. La figure 10b montre la position du poinçon en fin de poinçonnement : les francs transversaux intérieurs du cran sont formés, parfaitement perpendiculaires à l'axe du tube puisque la matière a été contenue par les faces latérales de la dent du poinçon 70 ; grâce à la forme spécifique de l'extrémité 71 du poinçon, les protubérances sont totalement effacées et la paroi du tube retrouve sa forme cylindrique d'origine ; les arêtes d'intersection entre les flancs et la paroi externe du tube 10 sont vives ; à l'intérieur du tube 10, la matière déplacée par le poinçon est contenue dans la gorge du mandrin 78 et prend donc la forme de la dite gorge.

Les figures 5, 11a à 11d montrent une mise en oeuvre du procédé en trois étapes ET1 à ET3, permettant de réaliser des crans ayant des flancs en contre-dépouille, légèrement incliné par rapport au plan de travail. L'étape ET1 est similaire à celle de l'exemple précédent. Le poinçon 80 (figure 8) utilisé lors de l'étape ET2 a cette fois une dent 82 dont la hauteur est supérieure à la hauteur du cran à réaliser de sorte que l'extrémité 81 du poinçon 80 ne vient pas en contact avec la surface extérieure de la paroi du tube lors de l'étape ET2. La figure 11a montre la position du poinçon 80 lorsqu'il arrive au contact de la zone à poinçonner. La distance entre les sommets des protubérances 55, 56 est environ égale à la largeur de la dent de poinçonnage 82 du deuxième poinçon. La figure 10b montre la position du poinçon à la fin de l'étape ET2 : les flancs et la paroi de fond du cran sont formés, mais les protubérances 55, 56 n'ont pas été totalement effacées sur la paroi externe du tube. La forme du deuxième poinçon 80 a justement été choisie pour que l'extrémité du deuxième poinçon ne vienne pas en contact avec la paroi du tube et ainsi ne vienne pas effacer complètement les protubérances 55, 56.

Ce qu'il reste des protubérances 55, 56 est ensuite effacé lors d'une troisième étape ET3, au cours de laquelle on guide un troisième poinçon 90 selon la direction de travail ; le troisième poinçon 90 comprend une extrémité 91 de forme complémentaire à la forme extérieure de la paroi du tube à cranter : dans les exemples des figures 9, 11c-d, une forme de portion de cylindre en creux ; le poinçon 90 ne comprend pas de dent. On exerce sur le poinçon un effort de calibrage adapté pour repousser à l'intérieur du cran formé l'excédent de matière refluée lors de l'étape ET1, c'est-à-dire la matière refluée lors de l'étape ET1 mais non "consommée" lors de l'étape ET2. La figure 11c montre la position du poinçon 80 lorsqu'il arrive au contact de la zone à poinçonner, sur les sommets de ce qu'il reste des protubérances. La figure 11d montre la position du poinçon 90 en fin de poinçonnement (fin de l'étape ET3) : l'extrémité 91 du poinçon est en contact avec la surface extérieure de la paroi du tube 10 de sorte que les protubérances 55, 56 sont totalement effacées sur la surface extérieure de la paroi du tube. Le poinçon 90 a repoussé la matière contenue dans ce qu'il reste des protubérances vers l'intérieur du cran (flèches sur la figure 11c), espace libre du fait de l'absence de dent sur le poinçon 90 ; ceci provoque une légère inclinaison vers l'intérieur des flancs du cran formé lors de l'étape ET2. Transversaux, parfaitement perpendiculaires à l'axe du tube en fin d'étape ET2, les flancs du cran sont en dévers, en contre-dépouille à la fin de l'étape ET3.

Le procédé selon l'invention peut être mis en oeuvre sur une machine comprenant :
- un moyen pour immobiliser un tube à cranter tout en laissant libre d'accès une zone à cranter sur une paroi externe du tube, et
- un moyen pour positionner au voisinage de la zone à cranter puis pour entraîner en translation selon une direction de travail B concourante avec l'axe longitudinal A du tube et perpendiculaire avec l'axe longitudinal du tube, successivement un premier poinçon 50 puis un deuxième poinçon 70, 80, et éventuellement un troisième poinçon 90.

Un exemple d'un moyen 30 pour immobiliser le tube à cranter est représenté sur les figures 3a (position ouverte) et 3b (position fermée). Il comprend une matrice inférieure 31, en forme de demi-coquille, et une matrice supérieure 32, comprenant deux parties 32a, 32b en quart de coquille, parties mobiles en translation l'un vers l'autre ; la matrice inférieure est mobile en translation vers la matrice supérieure ; les formes intérieures des matrices sont adaptées pour que, lorsque les matrices sont associées, le tube est immobilisé à l'intérieur de la matrice. Des moyens (une presse par exemple), non représentés, réalisent les mouvements relatifs des deux parties de la matrice supérieure, puis de la matrice inférieure vers la matrice supérieure. Dans un autre exemple, non représenté, le moyen 30 comprend une matrice inférieure et une matrice supérieure, chacune en une seule partie.

Le moyen 30 assure également le guidage des poinçons à travers la matrice selon la direction de travail B. Pour cela, dans l'exemple des figures 3a, 3b, deux rainures 34, 35 sont formées respectivement dans chaque partie 32a, 32b de la matrice supérieure, pour former ensemble, lorsque la matrice est fermée, une fenêtre de guidage d'un poinçon, fenêtre s'étendant selon la direction de travail B. Au voisinage de l'extérieur de la matrice supérieure 32, la fenêtre de guidage a précisément la forme d'un corps des poinçons, soit dans l'exemple représenté une section carrée. Par contre, au voisinage de l'intérieur de la matrice 32, les rainures 34, 35 sont plus larges, plus profondes, laissant ainsi un espace libre pour permettre la formation des protubérances 55, 56 lors de l'étape ET1. Dans un autre exemple, on utilise une paire de matrices (une matrice inférieure et une matrice supérieure) pour chaque poinçon, et on change de matrice à chaque changement de poinçon, c'est-à-dire à chaque étape du procédé. Ceci permet d'avoir à chaque étape une matrice dont la fenêtre de guidage a, à chaque étape, la forme la plus appropriée pour maintenir le tube, guider le poinçon et contenir, ou non, localement, la matière de la paroi du tube susceptible d'être déplacée lors d'une étape, pour permettre d'une part la formation des protubérances lors de l'étape ET1, et d'autre part pour contenir la matière lors de l'étape ET2 ou ET3.

Les deux ou trois poinçons sont par exemple montés sur un même support (non représenté) mobile en translation qui, à chaque étape, positionne au dessus de la matrice le poinçon approprié. Une presse, non représentée, entraîne ensuite en mouvement l'un ou l'autre des poinçons selon la direction de travail B, avec un effort approprié en fonction de l'étape ET1, ET2, ou ET3 à réaliser.

Egalement, les deux mandrins, mandrin plein 58 et mandrin à gorge 78, sont par exemple montés sur un même support (non représenté) mobile en translation et en rotation qui, à chaque étape, positionne à l'intérieur du tube le mandrin approprié. Un moyen, par exemple un vérin, non représenté, entraîne ensuite en translation ou en rotation selon l'axe du tube le mandrin approprié à l'étape ET1, ET2 ou ET3 à réaliser. Dans un autre exemple (non représenté), les deux mandrins sont deux parties d'un même mandrin mobile en translation et en rotation et, à chaque étape, un moyen tel qu'un vérin entraîne le mandrin en translation ou en rotation selon l'axe du tube de sorte à positionner au voisinage de la zone à cranter la partie du mandrin appropriée à l'étape ET1, ET2 ou ET3 à réaliser.

Le mandrin à gorge 78 comporte une gorge de forme similaire à celle du cran à réaliser, mais de largeur et de hauteur légèrement supérieures (cf les figures 10a-10b et 11a-11d), de sorte à contenir la matière repoussée par les poinçons. Le mandrin 78 comprend également une gorge longitudinale s'étendant sur toute la longueur du mandrin permettant de retirer le mandrin du tube après poinçonnage. Dans les modes de réalisation représentés, pour la réalisation d'un cran transversal, la gorge longitudinale est droite, selon l'axe A. Après poinçonnage, le mandrin est entraîné en rotation selon l'axe du tube, jusqu'à ce que le cran formé soit positionné dans la gorge, puis le mandrin est entraîné en translation pour être retiré. Dans un autre mode de réalisation, pour la réalisation d'un cran incliné, par exemple le cran 13b de la figure 2, la gorge longitudinale comprend une portion hélicoïdale et une portion droite. Après poinçonnage, le mandrin est entraîné en mouvement simultanément de rotation et de translation le long de la portion hélicoïdale jusqu'à ce que le cran formé soit positionné dans la partie droite de la gorge ; puis le mandrin est entraîné en translation selon l'axe A pour être complètement retiré.

### Nomenclature

- A: axe longitudinal du tube
- B: direction de travail des poinçons
- 10: tube à cranter
- 11, 12: crans à un flanc transversal et un flanc incliné
- 13, 13a, 13b: crans à deux flancs transversaux

- 30: moyen pour immobiliser le tube et positionner les poinçons
- 31: matrice inférieure
- 32: matrice supérieure
- 32a, 32b: deux parties de la matrice supérieure
- 34, 35: rainures

- 41, 42: affaissements locaux de la surface externe de la paroi du tube

- 50: premier poinçon
- 51: extrémité du premier poinçon
- 52: dent de préformage
- 53: extrémité d'attaque
- 55, 56: protubérances, reflux de matière de part et d'autre du premier poinçon
- 58: mandrin plein

- 70: deuxième poinçon - 1er mode de réalisation
- 71: extrémité du deuxième poinçon
- 72: dent de poinçonnage
- 73: extrémité d'attaque de la dent de poinçonnage
- 74, 76: faces latérales de l'extrémité 73
- 75: face d'attaque
- 78: mandrin
- 79: gorge du mandrin 78

- 80: deuxième poinçon - 2ème mode de réalisation
- 81: extrémité du deuxième poinçon
- 82: dent de poinçonnage
- 83: extrémité d'attaque de la dent de poinçonnage
- 84: face latérale de l'extrémité 83
- 85: face d'attaque
- 90: troisième poinçon

## Revendications

1. Procédé au cours duquel on réalise, dans une paroi externe d'un tube (10) s'étendant selon un axe longitudinal (A), par guidage de poinçons dans un plan de travail (C) et selon une direction de travail (B) concourante avec l'axe longitudinal du tube, au moins un cran (11, 12, 13, 13a, 13b) comprenant au moins un flanc de verrouillage, procédé **caractérisé en ce qu'**on réalise les étapes suivantes :
• ET1 : on guide un premier poinçon (50) selon la direction de travail (B), une dent de préformage (52) du premier poinçon s'étendant depuis une extrémité (51) du premier poinçon et parallèlement au plan de travail (C), une intersection d'une extrémité d'attaque (53) de la dent de préformage (52) avec le plan de travail formant une droite, et une intersection de ladite extrémité d'attaque (53) de la dent de préformage (52) avec un plan parallèle à l'axe longitudinal du tube formant une courbe convexe, et on exerce sur le premier poinçon un effort de préformage apte à faire pénétrer la dent de préformage dans la paroi du tube jusqu'à obtenir une protubérance (55, 56) de matière de part et / ou d'autre de l'extrémité d'attaque (53) de la dent de préformage (52), un mandrin (58) cylindrique plein étant positionné à l'intérieur du tube, puis
• ET2 : on guide un deuxième poinçon (70, 80) selon la direction de travail (B), une dent de poinçonnage (72, 82) du deuxième poinçon s'étendant depuis une extrémité (71, 81) du deuxième poinçon et parallèlement au plan de travail (C), une extrémité d'attaque (73, 83) de la dent de poinçonnage (72, 82) présentant une forme complémentaire à une forme du cran à réaliser, et on exerce sur le poinçon un effort de poinçonnage apte à faire pénétrer la dent de poinçonnage dans la paroi du tube d'une distance radiale égale à la profondeur du cran à réaliser, un mandrin de poinçonnage (78) étant positionné à l'intérieur du tube, le dit mandrin de poinçonnage présentant au voisinage d'une zone de crantage une gorge (79) adaptée à contenir une matière refoulée lors du déplacement du deuxième poinçon.

2. Procédé selon la revendication 1 dans lequel, dans l'étape ET2, l'extrémité d'attaque (73) de la dent de poinçonnage (72) présente :
• une face d'attaque reliant des extrémités d'une première face latérale parallèle au plan de travail et d'une deuxième face latérale inclinée par rapport au plan de travail, ou
• une face d'attaque reliant des extrémités de deux faces latérales parallèles au plan de travail.

3. Procédé selon l'une des revendications 1 ou 2 dans lequel :
• une hauteur de la dent de poinçonnage (72) est égale à la profondeur du cran à réaliser, et
• l'extrémité (71) du deuxième poinçon (70) présente une forme complémentaire à une forme extérieure de la paroi du tube à cranter.

4. Procédé selon l'une des revendications 1 ou 2 dans lequel la hauteur de la dent de poinçonnage (82) est supérieure à la profondeur du cran à réaliser, et dans lequel on réalise, après l'étape ET2, l'étape ET3 suivante :
• ET3 : on guide un troisième poinçon (90) selon la direction de travail (B), le troisième poinçon comprenant une extrémité (91) de forme complémentaire à une forme extérieure de la paroi du tube à cranter, et on exerce sur le troisième poinçon un effort de calibrage pour repousser à l'intérieur du cran formé une matière en surplus sur la surface externe du tube au voisinage des arêtes du cran formé.

5. Procédé selon l'une des revendications précédentes dans lequel l'intersection de l'extrémité d'attaque (53) de la dent de préformage (52) avec un plan parallèle à l'axe longitudinal du tube (A) forme une courbe convexe de type :
• courbe en V constituée de deux segments, l'intersection des deux segments formant une arête vive, un arc de cercle, une parabole ou une hyperbole,
• courbe en U, ou
• parabole ou hyperbole.

6. Procédé selon l'une des revendications précédentes pour cranter des tubes cylindriques, au cours duquel l'extrémité du deuxième poinçon (70) et du troisième poinçon (90) a une forme demi-cylindrique en creux, complémentaire à la forme extérieure de la paroi du tube à cranter.

7. Machine pour la réalisation de crans, sur un tube s'étendant selon un axe longitudinal, la machine comprenant :
• un moyen (30) pour immobiliser un tube à cranter tout en laissant libre d'accès une zone à cranter sur une paroi externe du tube,
• un premier poinçon (50), un deuxième poinçon (70, 80), un mandrin plein et un mandrin à gorge,
• un moyen pour positionner (30, 34, 35) au voisinage de la zone à cranter puis pour entraîner en translation dans un plan de travail (C) et selon une direction de travail (B) concourante avec l'axe longitudinal (A) du tube, successivement ledit premier poinçon (50) puis ledit deuxième poinçon (70, 80) :
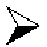 une dent de préformage (52) du premier poinçon (50) s'étendant depuis une extrémité (51) du premier poinçon et parallèlement au plan de travail (C), une intersection d'une extrémité d'attaque (53) de la dent de préformage (52) avec le plan de travail formant une droite, et une intersection de ladite extrémité d'attaque (53) de la dent de préformage (52) avec un plan parallèle à l'axe longitudinal (A) du tube formant une courbe convexe,
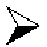 une dent de poinçonnage (72, 82) du deuxième poinçon s'étendant depuis une extrémité (71, 81) du deuxième poinçon et parallèlement au plan de travail (C), une extrémité d'attaque (73, 83) de la dent de poinçonnage (72, 82) présentant une forme complémentaire à une forme du cran à réaliser, et
• un moyen pour positionner à l'intérieur du tube à cranter successivement ledit mandrin plein puis ledit mandrin à gorge.

## Patentansprüche

1. Verfahren, bei dem in einer äußeren Wand eines Rohrs (10), das sich gemäß einer Längsachse (A) erstreckt, durch Führen von Stempeln in einer Arbeitsebene (C) und gemäß einer mit der Längsachse des Rohrs zusammenfallenden Arbeitsrichtung (B) mindestens eine Kerbe (11, 12, 13, 13a, 13b) hergestellt wird, umfassend mindestens eine Verriegelungsflanke, wobei das Verfahren **dadurch gekennzeichnet ist, dass** die folgenden Schritte durchgeführt werden:
• ET1: Führen eines ersten Stempels (50) in der Arbeitsrichtung (B), raobei sich ein Vorformzahn (52) des ersten Stempels von einem Ende (51) des ersten Stempels und parallel zur Arbeitsebene (C) erstreckt, wobei ein Schnittpunkt eines Angriffsendes (53) des Vorformzahns (52) mit der Arbeitsebene eine Gerade bildet, und ein Schnittpunkt des Angriffsendes (53) des Vorformzahns (52) mit einer zur Längsachse des Rohrs parallelen Ebene eine konvexe Krümmung bildet, und auf den ersten Stempel eine Vorformkraft ausgeübt wird, die imstande ist, den Vorformzahn in die Wand des Rohrs bis zum Erhalten einer Materialausstülpung (55, 56) auf der einen Seite und / oder auf der anderen Seite des Angriffsendes (53) des Vorformzahns (52) eindringen zu lassen, wobei ein voller zylindrischer Kern (58) im Innern des Rohrs positioniert ist, dann
• ET2: Führen eines zweiten Stempels (70, 80) in der Arbeitsrichtung (B), wobei sich ein Stempelzahn (72, 82) des zweiten Stempels von einem Ende (71, 81) des zweiten Stempels und parallel zur Arbeitsebene (C) erstreckt, wobei ein Angriffsendes (73, 83) des Stempelzahns (72, 82) eine zur Form der herzustellenden Kerbe komplementäre Form aufweist, und auf den Stempel eine Stempelkraft ausgeübt wird, die imstande ist, den Stempelzahn in die Wand des Rohrs in einer radialen Distanz eindringen zu lassen, die gleich der Tiefe der herzustellenden Kerbe ist, wobei ein Stempelkern (78) im Innern des Rohrs positioniert ist, wobei der Stempelkern in der Nähe einer Kerbzone eine Nut (79) aufweist, die ausgebildet ist, um ein bei der Verlagerung des zweiten Stempels gestauchten Materials zu enthalten.

2. Verfahren nach Anspruch 1, wobei in Schritt ET2 das Angriffsende (73) des Stempelzahns (72) aufweist:
• eine Angriffsfläche, die Enden einer ersten seitlichen Fläche, die parallel zur Arbeitsebene ist, und einer zweiten seitlichen Fläche, die in Bezug zur Arbeitsebene geneigt ist, verbindet, oder
• eine Angriffsfläche, die Enden von zwei seitlichen Flächen verbindet, die parallel zur Arbeitsebene sind.

3. Verfahren nach einem der Ansprüche 1 oder 2, wobei:
• eine Höhe des Stempelzahns (72) der Tiefe der herzustellenden Kerbe entspricht, und
• das Ende (71) des zweiten Stempels (70) eine zu einer äußeren Form der Wand des zu kerbenden Rohrs komplementäre Form aufweist.

4. Verfahren nach einem der Ansprüche 1 oder 2, wobei die Höhe des Stempelzahns (82) höher als die herzustellende Kerbe ist, und wobei nach dem Schritt ET2 der folgende Schritt ET3 durchgeführt wird:
• ET3: Führen eines dritten Stempels (90) in der Arbeitsrichtung (B), wobei der dritte Stempels ein Ende (91) mit einer zu einer äußeren Form der Wand des zu kerbenden Rohrs komplementäre Form umfasst, und auf den dritten Stempel eine Kalibrierkraft ausgeübt wird, um in das Innere der gebildeten Kerbe ein überschüssiges Material auf der äußeren Oberfläche des Rohrs in der Nähe der Kanten der gebildeten Kerbe zurückzudrücken.

5. Verfahren nach einem der vorangehenden Ansprüche, wobei der Schnittpunkt des Angriffsendes (53) des Vorformzahns (52) mit einer zur Längsachse des Rohrs (A) parallelen Ebene eine konvexe Krümmung bildet des Typs:
• V-förmige Krümmung, die aus zwei Segmenten gebildet ist, wobei der Schnittpunkt der zwei Segmente eine scharfe Kante, einen Kreisbogen, eine Parabel oder eine Hyperbel bildet,
• U-förmige Krümmung oder
• Parabel oder Hyperbel.

6. Verfahren nach einem der vorangehenden Ansprüche zum Kerben von zylindrischen Rohren, bei dem das Ende des zweiten Stempels (70) und des dritten Stempels (90) eine hohle halbzylindrische Form hat, die zur äußeren Form der Wand des zu kerbenden Rohrs komplementär ist.

7. Maschine zur Herstellung von Kerben auf einem Rohr, das sich gemäß einer Längsachse erstreckt, wobei die Maschine umfasst:
• ein Mittel (30) zum Ruhigstellen eines zu kerbenden Rohrs, wobei der Zugang zu einer auf einer äußeren Wand des Rohrs zu kerbenden Zone frei bleibt,
• einen ersten Stempel (50), einen zweiten Stempel (70, 80), einen vollen Kern und einen Kern mit Nut,
• ein Mittel zum aufeinanderfolgenden Positionieren (30, 34, 35) in der Nähe der zu kerbenden Zone, danach zum verschiebenden Bewegen in einer Arbeitsebene (C) und gemäß einer Arbeitsrichtung (B), die mit der Längsachse (A) des Rohrs zusammenfällt, des ersten Stempels (50) und danach des zweiten Stempels (70, 80):
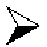 wobei sich ein Vorformzahn (52) des ersten Stempels (50) von einem Ende (51) des ersten Stempels und parallel zur Arbeitsebene (C) erstreckt, wobei ein Schnittpunkt eines Angriffsendes (53) des Vorformzahns (52) mit der Arbeitsebene eine Gerade bildet, und ein Schnittpunkt des Angriffsendes (53) des Vorformzahns (52) mit einer zur Längsachse (A) des Rohrs parallelen Ebene eine konvexe Krümmung bildet,
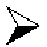 wobei sich ein Stempelzahn (72, 82) des zweiten Stempels von einem Ende (71, 81) des zweiten Stempels und parallel zur Arbeitsebene (C) erstreckt, wobei ein Angriffsende (73, 83) des Stempelzahns (72, 82) eine zu der herzustellenden Kerbe komplementäre Form aufweist, und
• ein Mittel, um im Innern des zu kerbenden Rohrs aufeinanderfolgende den vollen Kern und danach den Kern mit Nut zu positionieren.

## Claims

1. A method during which is produced, in an outer wall of a tube (10) extending along a longitudinal axis (A), through guiding punches in a working plane (C) and in a working direction (B) concurrent with the longitudinal axis of the tube, at least one notch (11, 12, 13, 13a, 13b) comprising at least one locking flank, in which method the following steps are performed:
• ST1: a first punch (50) is guided in the working direction (C), a preforming tooth (52) of the first punch extending from one end (51) of the first punch and parallel to the working plane (C), an intersection of a leading end (53) of the preforming tooth (52) with the working plane forming a straight line, and an intersection of said leading end (53) of the preforming tooth (52) with a plane parallel to the longitudinal axis of the tube forming a convex curve, and onto the first punch is exerted a preforming force capable of causing the preforming tooth to penetrate into the wall of the tube until obtaining a protuberance (55, 56) of material on both sides of the leading end (53) of the preforming tooth (52), a solid cylindrical mandrel (58) being positioned inside the tube, then
• ST2: a second punch (70, 80) is guided in the working direction (B), a punching tooth (72, 82) of the second punch extending from one end (71, 81) of the second punch and parallel to the working plane (C), a leading end (73, 83) of the punching tooth (72, 82) having a shape complementary to a shape of the notch to be produced, and on the punch and is exerted a punching force capable of causing the punching tooth to penetrate into the wall of the tube by a radial distance equal to the depth of the notch to be produced, a punching mandrel (78) being positioned inside the tube, said punching mandrel having, near to a notching area, a groove (79) adapted for containing a material displaced during the displacement of the second punch.

2. A method according to claim 1, wherein, in the step ST2, the leading end (73) of the punching tooth (72) has:
• a leading face connecting ends of a first side face parallel to the working plane and of a second side face inclined with respect to the working plane, or
• a leading face connecting the ends of two side faces parallel to the working plane.

3. A method according to one of claims 1 or 2, wherein:
• a height of the punching tooth (72) is equal to the depth of the notch to be produced, and
• the end (71) of the second punch (70) has a shape complementary to an outer shape of the wall of the tube to be notched.

4. A method according to one of claims 1 or 2, wherein the height of the punching tooth (82) is larger than the depth of the notch to be produced, and wherein is performed, after the step ST2, the following step ST3:
• ST3: a third punch (90) is guided in the working direction (B), the third punch comprising an end (91) with a shape complementary to an outer shape of the wall of the tube to be notched, and on the third punch is exerted a calibration force, in order to push into the interior of the notch being formed an excess material on the outer surface of the tube in the vicinity of the edges of the notch being formed.

5. A method according to one of the preceding claims, wherein the intersection of the leading end (53) of the preforming tooth (52) with a plane parallel to the longitudinal axis of the tube (A) forms a convex curve of the type:
• V-shaped curve formed of two segments, the intersection of two segments forming a sharp edge, an arc of a circle, a parabola or a hyperbola,
• a U-shaped curve, or
• a parabola or a hyperbola.

6. A method according to one of the preceding claims for notching cylindrical tubes, during which the end of the second punch (70) and the third punch (90) has a hollow semi-cylindrical shape, complementary to the outer shape of the wall of the tube to be notched.

7. A machine for producing notches on a tube extending along a longitudinal axis, the machine comprising:
• a means (30) for immobilizing a tube to be notched, while leaving free access to an area to be notched on an outer wall of the tube,
• a first punch (50), a second punch (70, 80), a solid mandrel and a mandrel with a groove,
• a means for positioning (30, 34, 35) in the vicinity of the area to be notched, then for driving in translation in a working plane (C) and in a working direction (B) concurrent with the longitudinal axis (A) of the tube, successively said first punch, then said second punch (70, 80):
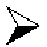 a preforming tooth (52) of the first punch (50) extending from one end (51) of the first punch and parallel to the working plane (C), an intersection of a leading end of said preforming tooth (52) with the working plane forming a straight line, and an intersection of said leading end (53) of the preforming tooth (52) with a plane parallel to the longitudinal axis (A) of the tube forming a convex curve,
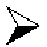 a punching tooth (72, 82) of the second punch extending from one end (71, 81) of the second punch and parallel to the working plane (C), a leading end (73, 83) of the punching tooth (72, 82) having a shape complementary to a shape of the notch to be produced, and
• a means for positioning inside the tube to be notched successively said solid mandrel, then said mandrel with a groove.
